**Europäisches Patentamt**

**European Patent Office**

**Office européen des brevets**

(11) Veröffentlichungsnummer: **0 240 724**
**B1**

(12) # EUROPÄISCHE PATENTSCHRIFT

(45) Veröffentlichungstag der Patentschrift:
24.05.89

(51) Int. Cl.⁴: **B 60 R 25/02**

(21) Anmeldenummer: 87103105.0

(22) Anmeldetag: 05.03.87

(54) Kraftfahrzeug-Lenkschloss.

(30) Priorität: 09.04.86 DE 3611962

(43) Veröffentlichungstag der Anmeldung:
14.10.87 Patentblatt 87/42

(45) Bekanntmachung des Hinweises auf die Patenterteilung:
24.05.89 Patentblatt 89/21

(84) Benannte Vertragsstaaten:
ES FR GB IT SE

(56) Entgegenhaltungen:
EP-A- 0 095 146
WO-A-83/03580
FR-A- 442 321

(73) Patentinhaber: TIBBE KG, Waldstrasse 2,
D-8065 Erdweg (DE)

(72) Erfinder: Limburg, Hans Joachim, Frühlingstrasse 1,
D-8061 Schwabhausen (DE)

(74) Vertreter: Oedekoven, Wolf-Dieter, Dipl. Ing.,
Erhardtstrasse 8/V, D-8000 München 5 (DE)

## Beschreibung

Die Erfindung bezieht sich auf ein Kraftfahrzeug-Lenkschloss der im Oberbegriff des Patentanspruchs 1 angegebenen Gattung.

Derartige Kraftfahrzeug-Lenkschlösser sind bekannt (FR-A 442 321). Dabei sind die beiden Sperrglieder jeweils als axial verschieblicher Sperrbolzen ausgebildet, welcher durch eine Schraubendruckfeder radial auf die rohrförmige Kraftfahrzeug-Lenkspindel zu belastet ist, um in der Verriegelungsstellung in ein Loch entsprechender Querschnittsgestalt der Lenkspindel einzugreifen, so dass sie nicht mehr gedreht werden kann. Die beiden Sperrbolzen wirken jeweils an dem der Lenkspindel abgewandten Ende mit einer äusseren Schrägfläche eines Steuernockens zusammen, an welchem sich die Sperrbolzen auf einander diametral gegenüberliegenden Seiten vorbei erstrecken und welcher mit dem drehbaren Zylinderkern eines Schliesszylinders fest verbunden ist, so dass die beiden Sperrbolzen simultan entgegen der Wirkung der jeweiligen Federbelastung aus der jeweiligen Verriegelungsstellung in die jeweilige Entriegelungsstellung verschoben werden, um die Lenkspindel freizugeben, wenn der Zylinderkern des Schliesszylinders mittels des zugehörigen Schlüssels entsprechend gedreht wird.

Die beiden Sperrbolzen können immer nur gleichzeitig in ihre Verriegelungsstellungen laufen, da die beiden Sperröffnungen der Lenkspindel in deren Längsrichtung aufeinander ausgerichtet sind. Wenn beim Lenkschlossabsperren die beiden Sperröffnungen der Lenkspindel nicht mit den beiden Sperrbolzen fluchten, dann können die Sperrbolzen nicht in ihre Verriegelungsstellungen laufen, sondern werden sie durch die Schraubendruckfedern gegen die äussere Mantelfläche der Lenkspindel gedrückt, welche also noch gedreht werden kann. Erst dann, wenn bei einem solchen Drehen die beiden Sperröffnungen der Lenkspindel vor die beiden Sperrbolzen gelangen, können letztere in die Sperröffnungen eintreten und ihre Verriegelungsstellungen einnehmen. Eine solche Lenkspindelverriegelung ist deswegen unbefriedigend, weil das jeweilige Kraftfahrzeug auch bei abgesperrtem Lenkschloss noch in begrenztem Umfang lenkbar bleibt und ausserdem die Möglichkeit gegeben ist, die Sperrbolzen durch ein starkes, ruckartiges Drehen der Lenkspindel abzuscheren oder in der unwirksamen Stellung zurückzuhalten, um das jeweilige Kraftfahrzeug unbefugterweise lenken zu können, wenn die Sperrbolzen beim Lenkschlossabsperren nicht sofort in die Sperröffnungen der Lenkspindel eintreten und in ihre Verriegelungsstellungen laufen.

Der Erfindung liegt die Aufgabe zugrunde, ein Kraftfahrzeug-Lenkschloss der im Oberbegriff des Patentanspruchs 1 angegebenen Gattung zu schaffen, bei welchem auf einfache Weise zuverlässig gewährleistet ist, dass die Kraftfahrzeug-Lenkspindel bei jedem Lenkschlossabsperren unabhängig von ihrer jeweiligen Drehstellung bezüglich der Sperrglieder verriegelt wird.

Diese Aufgabe ist durch die im kennzeichnenden Teil des Patentanspruchs 1 angegebenen Merkmale gelöst. Vorteilhafte Ausgestaltungen des erfindungsgemässen Kraftfahrzeug-Lenkschlosses sind in den restlichen Patentansprüchen angegeben.

Beim erfindungsgemässen Kraftfahrzeug-Lenkschloss ist sichergestellt, dass bei jedem Lenkschlossabsperren, also nach jedem Zurückdrehen des Zylinderkerns des Schliesszylinders mittels des eingesteckten Schlüssels in die Ausgangsstellung und dem anschliessenden Abzug des Schlüssels aus dem Zylinderkern, mindestens eine Sperrnase der Sperrplatte in eine zugehörige Sperröffnung der Lenkspindel eingreift und in einem solchen Fall die zweite Sperrnase ebenfalls sofort in eine zugehörige Sperröffnung einfällt, wenn die Lenkspindel nur geringfügig in der einen oder in der anderen Richtung gedreht wird. Wenn beide Sperrnasen der Sperrplatte ihre jeweilige Verriegelungsstellung einnehmen, dann ist jegliches Drehen der Lenkspindel blockiert.

Nachstehend ist eine Ausführungsform des erfindungsgemässen Kraftfahrzeug-Lenkschlosses anhand von Zeichnungen beispielsweise beschrieben. Darin zeigt:

Fig. 1 den Schnitt entlang die Linie I-I in Fig. 2, wobei sich die beiden Sperrnasen der Sperrplatte in ihren Verriegelungsstellungen befinden;

Fig. 2 den Schnitt entlang der Linie II-II in Fig. 1;

Fig. 3 den Schnitt gemäss Fig. 2, wobei sich nur die rechte Sperrnase der Sperrplatte in ihrer Verriegelungsstellung befindet;

Fig. 4 den Schnitt gemäss Fig. 2, wobei sich nur die linke Sperrnase der Sperrplatte in ihrer Verriegelungsstellung befindet, und

Fig. 5 den Schnitt gemäss Fig. 2, wobei sich die beiden Sperrnasen der Sperrplatte in ihren Entriegelungsstellungen befinden.

Das dargestellte Kraftfahrzeug-Lenkschloss dient zur Verriegelung einer Kraftfahrzeug-Lenkspindel 1 gegen Drehen, welche sich in einem Mantelrohr 2 erstreckt, und weist ein Gehäuse 3 auf, welches am Mantelrohr 2 befestigt ist. Im Gehäuse 3 ist ein Schliesszylinder 4 befestigt, dessen drehbarer Zylinderkern mit einer koaxialen Welle 5 fest verbunden ist. Mittels der Welle 5 kann ein am Gehäuse 3 befestigter Zündanlassschalter 6 betätigt werden.

Im Gehäuse 3 ist eine Sperrplatte 7 angeordnet, welche sich in einer die Lenkspindellängsachse 8 enthaltenden sowie zur Welle 5 senkrechten Ebene erstreckt, durch einen Schlitz 9 des Gehäuses 3 hindurch in das Mantelrohr 2 hinein bewegt werden kann, auf die Lenkspindel 1 zu federbelastet ist, beispielsweise durch eine nicht dargestellte Blattfeder zwischen der Sperrplatte 7 und einem Gehäusedeckel 10, und an dem der Lenkspindel 1 zugewandten Ende zwei zahnartige Sperrnasen 11 sowie 12, am anderen Ende einen Vorsprung 13 und in der Mitte ein Langloch 14 aufweist, das sich vom einen zum anderen Ende erstreckt. Die beiden Sperrnasen 11, 12 sind im Abstand voneinander angeordnet und auf die Lenkspindel 1 zu gerichtet.

Der Vorsprung 13 ist zum Schliesszylinder 5 hin gerichtet und von einem Exzenter 15 untergriffen, welcher an der Welle 5 vorgesehen ist. Durch das Langloch 14 erstreckt sich ein Fortsatz 16 verminderten Durchmessers der Welle 5, welcher in den Zündanlassschalter 6 eingreift.

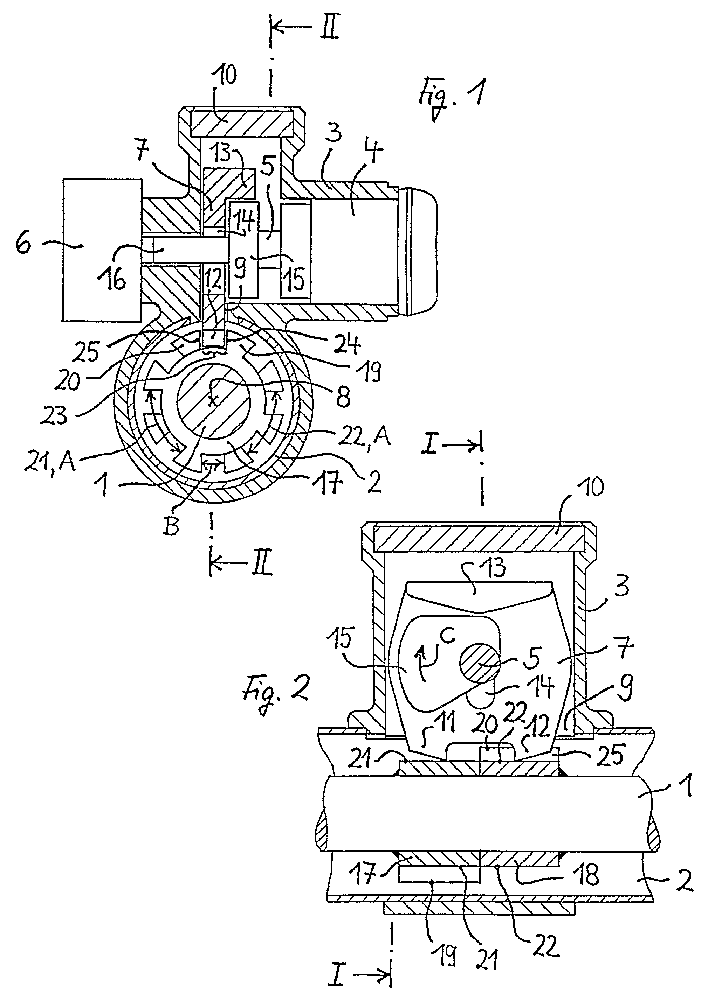

Auf der Lenkspindel 1 sind zwei identische Hülsen 17 sowie 18 mit je vier äusseren Längsvorsprüngen 19 bzw. 20 und je vier äusseren Längsnuten 21 bzw. 22 nebeneinander befestigt, und zwar in Umfangsrichtung gegenseitig so versetzt, dass jeder Längsvorsprung 19 bzw. 20 jeder Hülse 17 bzw. 18 etwa in der Mitte zwischen zwei einander benachbarten Längsvorsprüngen 20 bzw. 19 der jeweils anderen Hülse 18 bzw. 17 liegt, wie besonders deutlich aus Fig. 1 ersichtlich ist. Daraus geht auch hervor, dass die Längsnuten 21 sowie 22 der beiden Hülsen 17 sowie 18 jeweils eine solche Breite A in Umfangsrichtung aufweisen, dass sich bei dem besagten gegenseitigen Versatz der beiden Hülsen 17 sowie 18 zwischen den in Umfangsrichtung gleichmässig verteilten Längsvorsprüngen 19 der Hülse 17 und den ebenfalls in Umfangsrichtung gleichmässig verteilten Längsvorsprüngen 20 der Hülse 18 insgesamt acht Längsspalten 23 ergeben, deren Breite B in Umfangsrichtung mindestens gleich der Dicke der Sperrplatte 7 bzw. der beiden Sperrnasen 11, 12 derselben ist.

Der Exzenter 15 kann mittels des in den Zylinderkern des Schliesszylinders 4 eingesteckten, nicht dargestellten Schlüssels zwischen der Stellung gemäss Fig. 1 bis 4 einerseits und der Stellung gemäss Fig. 5 andererseits in Richtung des Pfeils C hin- und in Richtung der Pfeils D hergedreht werden, um die Sperrplatte 7 entgegen der Wirkung ihrer Federbelastung von der Lenkspindel 1 weg in die Stellung gemäss Fig. 5 zu schieben bzw. sich unter der Wirkung ihrer Federbelastung aus dieser Stellung, in welcher die Sperrplatte 7 aus dem Mantelrohr 2 vollständig in das Gehäuse 3 zurückgezogen ist und ihre beiden Sperrnasen 11, 12 sich in ihren Entriegelungsstellungen befinden, durch den Schlitz 9 des Gehäuses 3 hindurch auf die Lenkspindel 1 zu bewegen zu lassen. Wenn dabei die Lenkspindel 1 eine solche Drehstellung einnimmt, dass ein Längsspalt 23 mit dem Schlitz 9 des Gehäuses 3 fluchtet, dann kann sich die Sperrplatte 7 senkrecht zur Lenkspindellängsachse 8 verschieben, um mit beiden Sperrnasen 11, 12 in den Längsspalt 23 einzutreten und die Lenkspindel 1 gegen Drehen zu verriegeln, wie in Fig. 1 und 2 dargestellt. Dabei wirken die beiden in der jeweiligen Verriegelungsstellung befindlichen Sperrnasen 11, 12 auf einander gegenüberliegenden Seiten mit der jeweils benachbarten, in Fig. 1 linken Seitenflanke 24 bzw. rechten Seitenflanke 25 derjenigen beiden Längsvorsprünge 19 sowie 20 der einen Hülse 17 bzw. der anderen Hülse 18 zusammen, welche sich in Fig. 1 rechts bzw. links neben der Sperrplatte 7 erstrecken und denjenigen Längsspalt 23 definieren, in welche sie mit ihren Sperrnasen 11, 12 eingetreten ist, um jegliches Drehen der Lenkspindel 1 in Fig. 1 entgegen dem Uhrzeigersinn bzw. im Uhrzeigersinn formschlüssig zu blockieren.

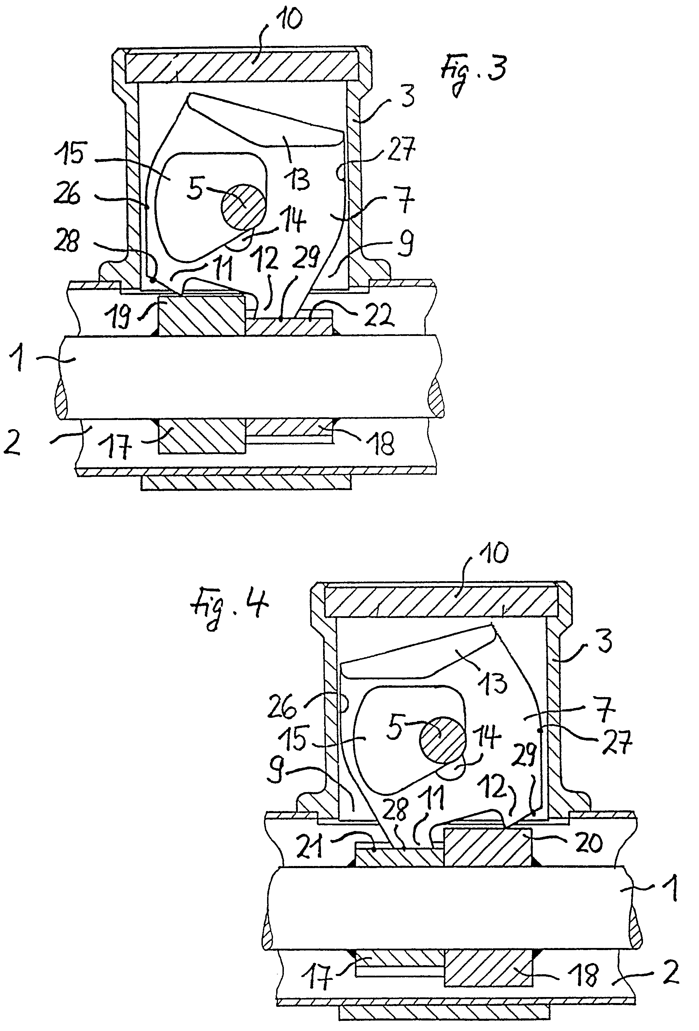

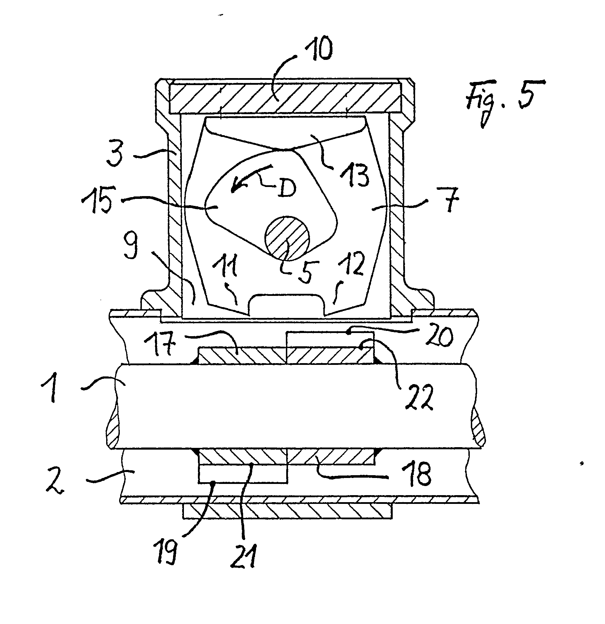

Wenn dagegen die Lenkspindel 1 beim Drehen des Exzenters 15 in Richtung des Pfeils D eine andere Drehstellung einnimmt, so dass ein Längsvorsprung 19 der einen Hülse 17 oder ein Längsvorsprung 20 der anderen Hülse 18 sich vor dem Schlitz 9 des Gehäuses 3 befindet, dann verschiebt sich die Sperrplatte 7 zwar auch senkrecht zur Lenkspindellängsachse 8 auf die Lenkspindel 1 zu, bis die zugehörige Sperrnase 11 bzw. 12 am Längsvorsprung 19 bzw. 20 zur Anlage kommt, um dann jedoch seitlich um den Fortsatz 16 der Welle 5 zu kippen, so dass die andere Sperrnase 12 bzw. 11 in die an den Längsvorsprung 19 bzw. 20 angrenzende Längsnut 22 bzw. 21 der Hülse 18 bzw. 17 eintritt und ihre Verriegelungsstellung einnimmt, wie in Fig. 3 bzw. 4 veranschaulicht, woraus ersichtlich ist, dass die Sperrplatte 7 sich im Uhrzeigersinn bzw. entgegen dem Uhrzeigersinn verschwenkt hat und derart geformte Seitenkanten 26, 27 aufweist, dass dieses Verschwenken nicht behindert wird, ebenso wie die beiden Sperrnasen 11, 12 jeweils mit einer derart schräg verlaufenden Endkante 28 bzw. 29 versehen sind, dass sie bei verschwenkter Sperrplatte 7 voll in die zugehörige Längsnut 21 bzw. 22 der Hülse 17 bzw. 18 eingreifen und mit der Endkante 28 bzw. 29 satt auf deren Boden aufliegen. Auch im Zustand gemäss Fig. 3 und 4 ist die Lenkspindel 1 formschlüssig verriegelt, so dass sie nicht mehr frei gedreht werden kann. Jeglicher Drehversuch in der einen oder in der anderen Richtung hat zur Folge, dass der Längsvorsprung 19 bzw. 20 der Hülse 17 bzw. 18, auf welchem die Sperrnase 11 bzw. 12 der Sperrplatte 7 aufliegt, unter dieser Sperrnase 11 bzw. 12 wegläuft und letztere in die anschliessende Längsnut 21 bzw. 22 der Hülse 17 bzw. 18 einfällt, wobei die Sperrplatte 7 zurückkippt, um die Stellung gemäss Fig. 1 und 2 einzunehmen und die Lenkspindel 1 mit beiden Sperrnasen 11, 12 formschlüssig gegen Drehen zu verriegeln.

Die beiden Sperrnasen 11, 12 der Sperrplatte 7 stellen also jeweils ein Sperrglied dar, welches in seine Verriegelungsstellung federbelastet ist und durch einen Steuernocken, nämlich den Exzenter 15, entgegen der Wirkung der Federbelastung aus der Verriegelungsstellung in seine Entriegelungsstellung bewegt werden kann. Die in Umfangsrichtung regelmässig verteilten Längsnuten 21 der einen Hülse 17 und Längsnuten 22 der anderen Hülse 18 bilden jeweils einen Kranz von Sperröffnungen der Lenkspindel 1 für das eine bzw. das andere Sperrglied bzw. für die eine bzw. die andere Sperrnase 11 bzw. 12 der Sperrplatte 7. Die Anordnung ist so getroffen, dass beim Lenkschlossabsperren, wobei der Steuernocken bzw. der Exzenter 15 in Richtung des Pfeils D in die Stellung gemäss Fig. 1 bis 4 bewegt wird, immer mindestens ein Sperrglied bzw. eine Sperrnase 11 bzw. 12 der Sperrplatte 7 unabhängig von der jeweiligen Drehstellung der Lenkspindel 1 wirksam wird, um die Lenkspindel 1 formschlüssig gegen Drehen zu verriegeln.

## Patentansprüche

1. Kraftfahrzeug-Lenkschloss mit zwei Sperrgliedern zur Verriegelung der Kraftfahrzeug-Lenkspindel (1) gegen Drehen, welche sich nebeneinander in einer die Lenkspindellängsachse (8) enthaltenden Ebene auf die Lenkspindel (1) zu erstrecken, jeweils mit einer Sperröffnung (21 bzw. 22) der Lenkspindel (1) zusammenwirken und in die jeweilige Verriegelungsstellung federbelastet sowie mittels eines Schliesszylinders (4) über einen Steuernocken entgegen der Wirkung der Federbelastung aus der Verriegelungsstellung in die jeweilige Entriegelungsstellung bewegbar sind, dadurch gekennzeichnet, dass

a) die beiden Sperrglieder von zwei Sperrnasen (11, 12) einer Sperrplatte (7) gebildet sind, welche auf die Lenkspindel (1) zu federbelastet und in der die Lenkspindellängsachse (8) enthaltenden Ebene schwenkbar sowie durch den als Exzenter (15) ausgebildeten Steuernocken entgegen der Wirkung der Federbelastung von der Lenkspindel (1) weg verschiebbar ist, und

b) die Lenkspindel (1) mit zwei Kränzen von in Umfangsrichtung gleichmässig verteilten Sperröffnungen (21 bzw. 22) für die eine bzw. die andere Sperrnase (11 bzw. 12) versehen ist, wobei die Sperröffnungen (21, 22) in Umfangsrichtung jeweils so breit und die beiden Kränze in Umfangsrichtung gegenseitig so versetzt sind, dass in jeder Drehstellung der Lenkspindel (1) mindestens einer Sperrnase (11 bzw. 12) eine Sperröffnung (21 bzw. 22) des zugehörigen Kranzes zur Aufnahme der Sperrnase (11 bzw. 12) gegenüberliegt und beim Einfallen beider Sperrnasen (11, 12) in je eine Sperröffnung (21 bzw. 22) des zugehörigen Kranzes die Sperrnasen (11, 12) auf einander gegenüberliegenden Seiten mit der jeweils benachbarten Seitenflanke (24 bzw. 25) der betreffenden Sperröffnung (21 bzw. 22) zusammenwirken.

2. Kraftfahrzeug-Lenkschloss nach Anspruch 1, dadurch gekennzeichnet, dass die Sperrplatte (7) an dem den Sperrnasen (11, 12) abgewandten Ende durch eine Blattfeder belastet ist.

3. Kraftfahrzeug-Lenkschloss nach Anspruch 1 oder 2, dadurch gekennzeichnet, dass die Sperrplatte (7) an dem den Sperrnasen (11, 12) abgewandten Ende mit einem Vorsprung (13) für den Angriff des Exzenters (15) versehen ist.

4. Kraftfahrzeug-Lenkschloss nach Anspruch 1, 2 oder 3, dadurch gekennzeichnet, dass die Sperrplatte (7) ein mittleres Langloch (14) aufweist, welches sich von dem mit den Sperrnasen (11, 12) versehenen Ende zum anderen Ende der Sperrplatte (7) erstreckt und von einer den Exzenter (15) tragenden Welle (5, 16) durchsetzt ist.

5. Kraftfahrzeug-Lenkschloss nach einem der vorstehenden Ansprüche, dadurch gekennzeichnet, dass auf der Lenkspindel (1) zwei Hülsen (17, 18) mit mehreren äusseren, in Umfangsrichtung gleichmässig verteilten Längsnuten (21 bzw. 22) befestigt sind, welche den einen bzw. den anderen Kranz von Sperröffnungen bilden.

## Claims

1. Motor vehicle steering lock with two locking members for locking the motor vehicle steering shaft (1) against rotation, the members extending adjacent to one another towards the steering shaft (1) in a plane containing the longitudinal axis (8) of the steering shaft, each cooperating with a locking opening (21 or 22) of the steering shaft (1) and being spring-urged to the respective locking position and being movable against the action of the spring-loading from the locking position into the respective unlocking position by means of a barrel lock (4) acting through a control cam, characterised in that

a) the two locking members are formed by two locking noses (11, 12) of a locking plate (7) which is spring-urged towards the steering shaft (1) and is capable of tilting in the plane containing the longitudinal axis (8) of the steering shaft and is capable of being displaced away from the steering shaft (1) against the action of the spring-loading by means of the control cam in the form of an eccentric (15), and

b) the steering shaft (1) is provided with two crowns of uniformly circumferentially distributed locking openings (21 and 22) for the one or the other locking nose (11 or 12), the locking openings (21, 22) each being so broad circumferentially and the two crowns being mutually offset in a circumferential direction in such a manner that in every angular position of the steering shaft (1) at least one locking nose (11 or 12) is aligned with a locking opening (21 or 22) of the associated crown for receiving the locking nose (11 or 12) and on the entry of both locking noses (11, 12), each in a respective locking opening (21 or 22) of the associated crown, the locking noses (11, 12) cooperate on mutually opposite sides with the respective adjacent side flank (24 or 25) of the associated locking opening (21 or 22).

2. Motor vehicle steering lock according to claim 1, characterised in that the locking plate (7) is acted on by a leaf-spring at that end of it which is furthest from the locking noses (11, 12).

3. Motor vehicle steering lock according to claim 1 or 2, characterised in that the locking plate (7) is provided at the end furthest from the locking noses (11, 12) with a projection (13) for engagement by the eccentric (15).

4. Motor vehicle steering lock according to claim 1, 2 or 3, characterised in that the locking plate (7) has a central elongated hole (14) which extends from the end which is provided with the locking noses (11, 12) to the other end of the locking plate (7) and is traversed by a spindle (5, 16) carrying the eccentric (15).

5. Motor vehicle steering lock according to one of the foregoing claims, characterised in that two sleeves (17, 18) with a number of external circumferentially uniformly distributed longitudinal grooves (21 and 22) defining the one and the other crown of locking openings are secured on the steering shaft 1.

## Revendications

1. Dispositif de blocage de direction de véhicule automobile comprenant deux organes de blocage destinés à verrouiller la colonne de direction (1) du véhicule en rotation, qui s'étendent vers la colonne de direction (1) l'un à côté de l'autre dans un plan qui contient l'axe longitudinal (8) de la colonne de direction, coopèrent chacun avec une ouverture de blocage (21 ou 22) respectivement de la colonne de direction (1) et sont sollicités élastiquement chacun dans sa position de verrouillage correspondante et peuvent être ramenés chacun de sa position de verrouillage à sa position de déverrouillage correspondante au moyen d'un barillet de serrure (4) par l'intermédiaire d'une came de commande et à l'encontre de l'action de la sollicitation élastique, caractérisé en ce que:

a) les deux organes de blocage sont formés par deux tenons de blocage (11, 12) appartenant à une plaquette de blocage (7) qui est sollicitée élastiquement vers la colonne de direction (1), qui peut pivoter dans le plan contenant l'axe longitudinal (8) de la colonne de direction et qui peut être éloignée de la colonne de direction (1) par la came de commande constituée par un excentrique (15), à l'encontre de l'action de la sollicitation élastique, et

b) la colonne de direction (1) est munie de deux couronnes d'ouvertures de blocage (21 et 22) respectivement uniformément réparties dans la direction circonférentielle, destinées à coopérer respectivement avec l'un et l'autre des tenons de blocage (11 et 12), les ouvertures de blocage (21, 22) étant chacune d'une largeur circonférentielle telle, et les deux couronnes étant décalées mutuellement dans la direction circonférentielle de telle manière que, dans chaque position angulaire de la colonne de direction (1), au moins un tenon de blocage (11 ou 12) respectivement se trouve en face d'une ouverture de blocage (21 ou 22) respectivement de la couronne correspondante pour recevoir le tenon de blocage (11 ou 12) et que, lorsque les deux tenons de blocage (11, 12) tombent chacun dans une ouverture de blocage (21 ou 22) respectivement de la couronne correspondante, les tenons de blocage (11, 12) coopèrent, sur des côtés mutuellement opposés, chacun avec le flanc latéral adjacent (24 ou 25) respectivement de l'ouverture de blocage (21 ou 22) respectivement correspondante.

2. Dispositif de blocage de direction de véhicule automobile selon la revendication 1, caractérisé en ce que la plaquette de blocage (7) est chargée par un ressort lame à son extrémité la plus éloignée des tenons de blocage (11, 12).

3. Dispositif de blocage de direction de véhicule automobile selon la revendication 1 ou 2, caractérisé en ce que, à son extrémité qui est la plus éloignée des tenons de blocage (11, 12), la plaquette de blocage (7) est munie d'une saillie (13) destinée à être attaquée par l'excentrique (15).

4. Dispositif de blocage de direction de véhicule automobile selon l'une des revendications 1, 2 ou 3, caractérisé en ce que la plaquette de blocage (7) présente un trou allongé central (14) qui s'étend de l'extrémité munie des tenons de blocage (11, 12) à l'autre extrémité de la plaquette de blocage (7), et est traversé par un arbre (5, 16) qui porte l'excentrique (15).

5. Dispositif de blocage de direction de véhicule automobile selon l'une des revendications précédentes, caractérisé en ce que sur la colonne de direction (1) sont fixés deux manchons (17, 18) qui portent plusieurs rainures longitudinales extérieures (21 ou 22) respectivement uniformément réparties dans la direction circonférentielle, qui forment respectivement l'une et l'autre des couronnes d'ouvertures de blocage.

Fig. 1

Fig. 2

Fig. 3

Fig. 4

Fig. 5